# EUROPEAN PATENT APPLICATION

(11) **EP 2 757 344 A1**
(43) Date of publication of application: **23.07.2014**
(21) Application number: 14164813.9
(22) Date of filing: 03.04.2007
(51) Int. Cl.: G01B 5/02, G01B 21/02, B65H 16/02, B65H 26/06, G01G 19/00, G01B 3/04, G01B 3/20

(54) **Product roll**

(30) Priority: 03.04.2006 NL 1031496
(62) Divisional of application: 07747273.6
(71) Applicant: Multifoil B.V., 4131 PA Vianen (NL)
(72) Inventor: Hooft, Johannes Wilhelmus Gerardus, 4124 AV Hagestein (NL)
(74) Representative: van Loon, Alexander

(57) **Abstract**

A product roll comprising a cylindrical, particularly hollow core (10) with a number of windings (11) of a strip of graphic film thereon. The product roll (10,11) is provided with visually discernible indication means (23) which, at least approximately, indicate a remaining strip length of the product.

## Description

The present invention relates to a product roll comprising a cylindrical, particularly hollow core with a number of windings of a strip of graphic film thereon, the product roll provided with indication means which, at least approximately, indicate a remaining strip length of the graphic film in visually discernible and direct manner.

For the printing of billboards, walls and the like use is normally made in the graphic industry of a high-grade, usually self-adhesive film which is processed onto a durable surface after being printed or punched out. The material and the properties of the film are here adapted in accordance with the specific application and the required lifespan. The product costs of the film which is used can hereby mount up quickly, and it is therefore important from an economic viewpoint to prevent waste of film.

A problem which occurs in practice is that such films are usually supplied on a roll in a determined standard length in the order of for instance 50 m, and are fed into a printing device on a roll. As much film from the roll is then used as is needed for the actual printing or punching pattern, including a machine-dependent infeed and end length. After several uses it is hereby no longer apparent how much strip length still remains on the roll, with the result that in some cases the remaining length is found to be insufficient to complete a printing or punching operation. The partially completed order must then be deemed lost and must be done again. Not only does this result in considerable economic damage due to the thus wasted film, but the operational costs of the equipment and ink used have also been wasted.

The present invention has for its object, among others, to provide a product roll of the type stated in the preamble with which such a loss can be avoided.

In order to achieve the intended object a product roll of the type stated in the preamble has the feature according to the invention that the indication means comprise a non-linear size indication provided on at least one head surface of the product roll. The non-linear character of the size indication on the end surface of the stacked windings is a reflection of the increasing winding circumference as the windings are further remote from the core. The size indication comprises for instance scale marks or other markings which will progress from finer to coarser to the centre in order to indicate an equal strip length. Because indication means are thus provided which provide, at least approximately, a direct view on the remaining film length, it is always clear to a user beforehand whether this length will be sufficient for a specific graphic operation. If not, or in the case of doubt, recourse is taken to another, a (more) complete roll, and the first roll is saved for a subsequent use requiring less length. A prior visual check is thus facilitated to avoid inadvertent production stops as a result of an insufficient film length.

A particular embodiment of the product roll according to another invention has the feature that the indication means comprise a manual measuring instrument which can be coupled at least temporarily to an electronic, at least read-out memory in which product roll data are stored and is able and adapted to measure a stack thickness of the windings and convert this into a remaining strip length and provide an indication of the remaining strip length in visually discernible and direct manner to a user.

In a further embodiment of this other invention the product roll has the feature that the indication means comprise a measuring instrument which is able and adapted to determine a weight of the windings and convert this to the strip length. The total weight is for instance determined from a total weight less an empty weight of the core, where after on the basis of a specific weight per unit of strip length a relatively accurate conversion can be made therefrom by the instrument to the overall strip length on the roll. For increased accuracy, both measuring methods can also be combined in a device and then mutually averaged.

The thus calculated strip length is generated to the user in a visually recognizable manner. In a particular embodiment of the product roll according to this other invention the measuring instrument has for this purpose the feature that the measuring instrument is provided with a display for displaying the remaining strip length. The display is for instance an electronic display such as an active or passive LCD (Liquid Crystal Display), a LED indication or other type of electronic image display device which is controlled by suitable processor means on the basis of the performed calculation to determine the total strip length.

For both the above-described calculations, specific product features such as a film thickness, a core thickness, a specific weight per unit of length or area, a strip width and an empty core weight are initial values for enabling a precise length determination to be made on the basis of the measured value.

An embodiment of the product roll according to this other invention is more particularly characterized here in that the product roll data comprise a product library with data of different types of product roll, and that the measuring instrument is provided with input means for receiving a product identification of a product roll for measuring. In this case only a unique product identification need be entered, where after the device can independently retrieve the data necessary for the calculation from the product library.

The product identification can be input manually. A particular embodiment of the device according to this other invention has for this purpose the feature that the input means comprise a panel with input keys. More convenience of use is however achieved with a further preferred embodiment of the device according to this other invention which is characterized in that the input means comprise an optionally wireless link for electronic data exchange. This can be wireless and/or contactless data transfer such as for instance on the basis of a remotely readable electronic label which is incorporated in or on the product roll and which is read magnetically or with radio frequency signals. For this purpose a further particular embodiment of the device according to this other invention has the feature that the instrument comprises an optionally wireless or contactless communication port for electronic data exchange.

It is also possible to make use of an electronically readable memory module which is associated with the product roll and in which the product identification is optionally stored with the product data, which module is inserted into a contact interface of the measuring instrument intended for this purpose. In a relatively simple embodiment the device according to this other invention otherwise has the feature that the input means comprise an optical barcode reader. The measuring instrument in this case reads the barcode, which thus provides a unique product identification on the basis of which specific product parameters can be retrieved.

The present invention will now be further elucidated on the basis of an exemplary embodiment and an associated drawing. In the drawing:
- figure 1: shows a longitudinal cross-section of a product roll;
- figure 2: shows a cross-section of a product roll; and
- figure 3: shows a side view of a first exemplary embodiment of a product roll according to the invention.

The figures are otherwise purely schematic and not drawn to scale. Some dimensions in particular may be exaggerated to greater or lesser extent for the sake of clarity. Corresponding parts are designated as far as possible in the figures with the same reference numeral.

As shown in the figures the product roll comprises a central, cylindrical core 10 with a stack 11 of windings of a strip of graphic film there around. In this example the film comprises a self-adhesive polyester film which is glued to a backing of silicone paper. The invention can however be applied with any type of graphic film.

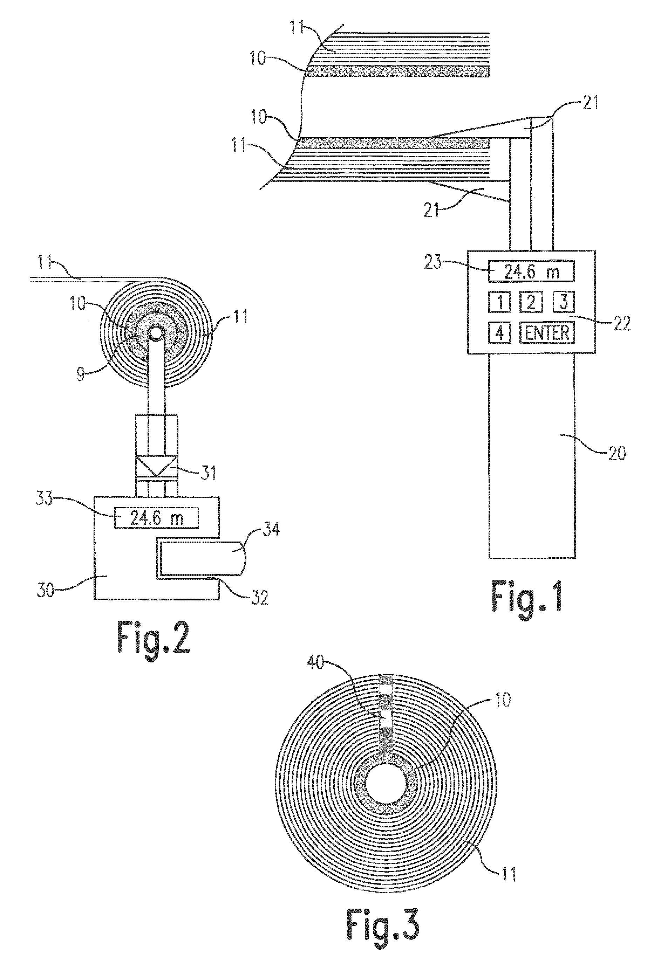

The film roll 10,11 is provided with indication means which indicate a remaining strip length in visually discernible manner. As shown in figure 3 the product roll according to the invention is provided on at least one head surface of the product roll with indication means in the form of a non-linear scale division 40 which indicates a remaining strip length of the film. The at least approximate remaining strip length can thus be read directly on one or both head surfaces.

Figure 1 shows another invention in that the indication means further comprise a measuring instrument 20 which is able and adapted to determine a stack thickness of windings 11. Measuring instrument 20 comprises for this purpose an electronic sliding jaw 21 which is laid clampingly round core 10 with stacking. Measuring instrument 20 incorporates an electronically writable and readable memory having a product library therein with data of available product rolls, such as core thickness and film thickness. By entering the correct product code by means of a keyboard 22 provided for this purpose, the instrument calculates the thickness of stack 11 from the electronically read slide rule value from which it subtracts the known thickness of core 10. On the basis of the film thickness, likewise stored in the library, a remaining strip length is then calculated therefrom by instrument 20, and this length is generated to the user in an electronic display 23. An indication of a remaining strip length on the roll is thus obtained almost instantaneously so that, in the case of an imminent shortage for a printing operation, it is possible for safety's sake to resort to a fuller roll and loss of material and production time can be limited to a minimum.

Instead of being equipped with a keyboard 22, measuring instrument 20 can otherwise also be equipped with other types of input means for the purpose of providing a product roll identification. An optical reader can thus for instance be coupled to instrument 20 for reading from the product roll a barcode unique for a type of product roll, or a fully automatic wireless link can even be made between the instrument and the product roll using an electronic sensor provided in the instrument for this purpose and an electronic and/or magnetic label which is accommodated in the product roll and which can thereby be read in wireless and contactless manner. In addition to or instead of merely a product (type) identification, other product roll data can here also be stored in such a label in electronically readable manner, on the basis of which data the measuring instrument can unambiguously determine a remaining strip length from the measured value.

In the example according to figure 2, which shows yet another invention, the product roll also comprises a stack of windings 11 of a graphic film round a hollow, cylindrical core 10. The product roll is placed on a rotating input spindle 9 of a printing device (not shown) which unwinds film 11 as required. Spindle 9 supports on a measuring instrument 30 which is able and adapted to determine a total weight of spindle 9 with product roll 10,11 thereon. The instrument comprises for this purpose a pressure-sensitive sensor 31 which generates an electronic signal as a measure of a pressure exerted thereon. This signal is compensated for the fixed weight of the spindle with suspension, and thus gives an indication of the net weight of the product roll.

In this example the measuring instrument comprises a communication port 32 into which an electronically readable memory module 34 can be inserted. In respect of plug-in module 34 and communication port 32, use can herein be made of electronic contacts and mating-contacts, or of a wireless link, particularly one based on a standardized protocol. Stored on plug-in module 34 are product data of the product roll, including a specific film mass per unit of length and a core mass. This core mass is subtracted by the instrument from the total weight determined by the pressure sensor, and the thus determined net weight is divided by the specific film mass in order to determine an overall strip length still remaining on roll 11. This strip length is generated to a user in a display 33.

Although the invention has been further elucidated above with reference to only one exemplary embodiment, it will be apparent that the invention is by no means limited thereto. On the contrary, many other variations and embodiments are possible within the scope of the present invention. In the exemplary embodiments use is for instance made in each case of a product roll with a separate, fixed core, but the invention can also be applied to product rolls without such a separate fixed core in the form of only a rolled-up film strip.

## Claims

1. Product roll comprising a cylindrical, particularly hollow core (10) with a number of windings (11) of a strip of graphic film thereon, the product roll provided with indication means (20) which, at least approximately, indicate a remaining strip length of the graphic film in visually discernible and direct manner, **characterized in that** the indication means comprise a non-linear size indication provided on at least one head surface of the product roll.
